(19) Europäisches Patentamt
European Patent Office
Office européen des brevets

(11) EP 1 883 565 B1

(12) EUROPÄISCHE PATENTSCHRIFT

(45) Veröffentlichungstag und Bekanntmachung des Hinweises auf die Patenterteilung:
**23.02.2011 Patentblatt 2011/08**

(21) Anmeldenummer: **06741009.2**

(22) Anmeldetag: **24.05.2006**

(51) Int Cl.:
***B61K 9/12*** *(2006.01)* ***G01M 17/10*** *(2006.01)*

(86) Internationale Anmeldenummer:
**PCT/AT2006/000210**

(87) Internationale Veröffentlichungsnummer:
**WO 2006/125237 (30.11.2006 Gazette 2006/48)**

(54) **VERFAHREN UND VORRICHTUNG ZUR ERFASSUNG VON RADFORMEN VON SCHIENENRÄDERN**

METHOD AND DEVICE FOR DETECTING WHEEL SHAPES OF RAIL WHEELS

PROCEDE ET DISPOSITIF DE DETECTION DE LA FORME DE ROUES SUR RAILS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.05.2005 AT 9082005**

(43) Veröffentlichungstag der Anmeldung:
**06.02.2008 Patentblatt 2008/06**

(73) Patentinhaber: **Hottinger Baldwin Messtechnik GmbH**
**1230 Wien (AT)**

(72) Erfinder:
- **STEPHANIDES, Johannes**
  **A-1200 Wien (AT)**
- **MAICZ, Dietmar**
  **A-8302 Nestelbach (AT)**
- **WEILINGER, Walter**
  **A-1060 Wien (AT)**

(74) Vertreter: **Holzer, Walter**
**Patentanwälte Schütz u. Partner**
**Brigittenauer Lände 50**
**1200 Wien (AT)**

(56) Entgegenhaltungen:
**EP-A- 0 282 615**
**EP-A- 1 521 072**
**DE-A1- 4 439 342**
**US-A- 4 702 104**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren und eine Vorrichtung zur Erfassung von Radformen von Schienenrädern.

Abweichungen der Radform der Schienenräder von der idealen Kreisform verursachen eine erhöhte Beanspruchung des Gleises und des rollenden Materials mit Beeinträchtigung der Transportqualität und entsprechender Kostenbelastung.

Aus der EP 1 212 228 B1 ist bereits eine Anlage zur Feststellung von Unrundheiten und Flachstellen an Fahrzeugrädern von Schienenfahrzeugen bekannt, die innerhalb einer vorgegebenen Meßstrecke mehrere Kraftaufnehmer zur Ermittlung der auf die Schienen wirkenden Vertikalkräfte aufweist. Die Kraftaufnehmer sind als Wägezellen ausgebildet, welche zwischen den Schienen und ortsfesten Schwellen angeordnet sind. Eine elektronische Auswerteeinrichtung errechnet beim Überfahren der Meßstrecke aus den Vertikalkraftsignalen eine mittlere Gewichtsbelastung und vergleicht diese mit dem zeitlichen Signalverlauf. Bei Überschreiten einer vorgegebenen Abweichung wird die Unrundheit bzw. Flachstelle angezeigt. Bei dieser bekannten Anlage erweist sich die Anwendung von Wägezellen, vor allem wegen ihrer komplizierten Ausbildung, als nachteilig.

Die EP 0 282 615 A lehrt eine Anordnung zum Detektieren von Radschäden mit an einer Schiene aufgebrachten Beschleunigungsaufnehmern, die Bewegungen der Schiene in Vertikalrichtung messen und deren Signale beim Abrollen eines Schienenrades einer FFT-Analyse unterzogen werden. Nachteil dieser Lehre ist ein grobes Meßergebnis.

Die US 4 702 104 A offenbart ebenfalls ein Verfahren zum Detektieren von Radververformungen von Schienenfahrzeugen. Hierzu werden Signale von an der Schiene aufgebrachten Sensoren elektronisch ausgewertet. Nachteil dieser Offenbarung ist, daß das Ergebnis nur auf die Auslösung eines Alarmes im Radschadensfall beschränkt ist, nicht aber in der genauen Radverformung besteht.

Die vorliegende Erfindung zielt darauf ab, ein verfeinertes Verfahren und eine entsprechende Vorrichtung zur Erfassung der Formen von Schienenrädern zu schaffen.

Ein erfindungsgemäßes Verfahren zur Erfassung von Radformen von Schienenrädern mit Hilfe einer Meßstrecke aus einer Reihe von an den Schienen angebrachten Meßelementen, welche Kraftwirkungen aufnehmen und entsprechende elektrische Signale über die Bewegung der Schiene in der Vertikalrichtung und vorzugsweise auch in der Querrichtung einer elektronischen Auswerteeinrichtung zur Darstellung der Radformen zuführen, zeichnet sich dadurch aus, daß in der Auswerteeinrichtung aus den Signalen ein Informationsarray gebildet wird, das zumindest einem Radumfang entspricht und welches aus mehreren Informationszellen gebildet wird, derart, daß sich ihre Signalanteile stetig aneinanderfügen, wobei vorzugsweise die Schieneneinsenkungen in relevante Anteile zerlegt und in der unmittelbaren Umgebung des Radaufstandspunktes berücksichtigt werden.

Vorzugsweise wird in der Auswerteeinrichtung eine kontinuierliche Darstellung der Signale als Funktion des Drehwinkels des zu prüfenden Rades vorgenommen.

Gegenstand der Erfindung ist auch eine Vorrichtung zur Durchführung des Verfahrens mit einer Meßstrecke aus einer Reihe von an den Schienen angebrachten Meßelementen und einer mit diesen verbundenen elektronischen Signalauswerteeinrichtung zur Darstellung der Radformen, wobei die Meßelemente am Schienensteg und/oder am Schienenfuß und/oder am Schienenkopf angebracht sind, dadurch gekennzeichnet, daß mindestens ein Meßelement am Schienensteg in der neutralen Faser unter einem negativen und einem positiven 45°-Winkel zur neutralen Faser aufgebracht ist.

Im Rahmen der Erfindung wird mindestens ein Meßelement als Dehnungsmeßstreifen ausgebildet.

Weiterhin bevorzugt werden in Ausgestaltung der erfindungsgemäßen Vorrichtung piezoelektrische Meßelemente aufgebracht.

Der Signalauswertung in der Auswerteeinrichtung wird somit erfindungsgemäß die Erkenntnis zugrundegelegt, daß die durch die Radformen bedingte zeitweilige Vertikalverschiebung des Schienenkopfes als flüchtige Schienenreaktion abgebildet und als Dehnungs- und/oder Beschleunigungssignal erfaßt werden kann. Mit dieser Schienenreaktion ist eine Wellenausbreitung in der Schiene (in der und gegen die Fahrtrichtung) verbunden, die in dem betrachteten Radaufstandpunkt und in seiner unmittelbaren Umgebung einen wandernden Knoten aufweist. Die radformbedingte Verschiebung dominiert im Knotenpunkt. Die Verhältnisse ändern sich erst, wenn das Rad anfängt abzuheben, wodurch die Knotenrandbedingung verlorengeht. Es werden "Informationszellen" gebildet, die aneinandergefügt ein "Informationsarray" bilden, derart, daß sich ihre Signalanteile stetig aneinanderfügen. Dieser Sachverhalt bietet eine Kontrollmöglichkeit.

Die Schieneneinsenkungen werden in relevante Anteile infolge der Radlast (durch Radformabweichungen und sonstige Schienenbewegungen) für die Radformabweichungsbeurteilung zerlegt und in der unmittelbaren Umgebung des Radaufstandspunktes berücksichtigt.

Für die Ermittlung der Radformen, insbesondere von längerwelligen Exzentrizitäten, Ovalitäten (usw.), sind allerdings Rollgeschwindigkeiten der Räder von mindestens 40 km/h erforderlich.

Die Erfindung wird nachfolgend an einem Ausführungsbeispiel unter Bezugnahme auf die Zeichnungen näher erläutert, die in Fig. 1 ein schematisches Diagramm der Unrundheit eines Schienenrades und in Fig. 2 eine schematische

Darstellung der Kraftaufnehmer an einer Schiene zeigen.

Fig. 1 zeigt in einem Diagramm die Unrundheit eines Rades, wobei als Rundheitsabweichung jede Art von Radiusabweichung gegenüber dem Kreis bezeichnet wird. Bei den Rundheitsabweichungen wird zwischen den nachstehenden Formen unterschieden:

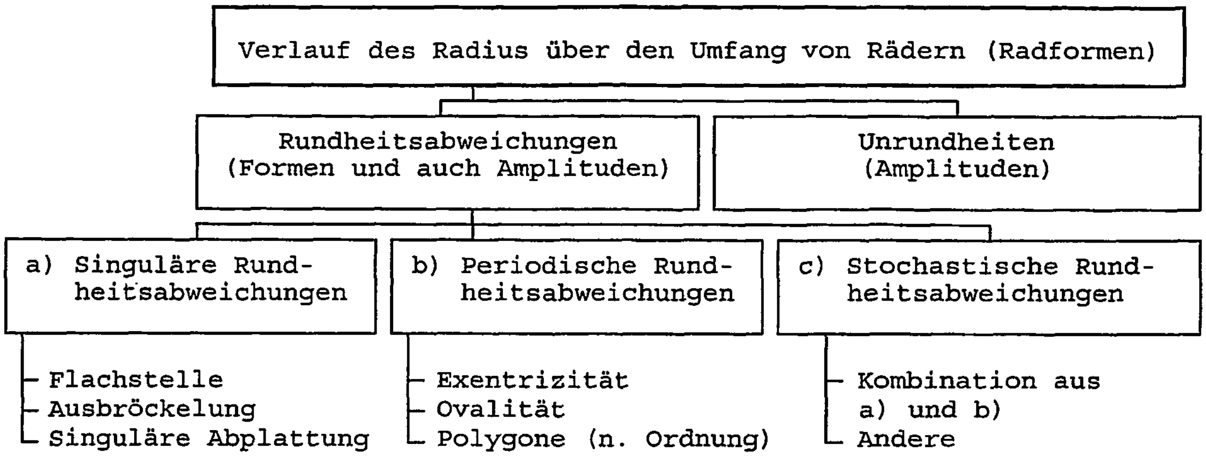


Anhand der Meßwerterfassung wird nachstehend das Funktionsprinzip der Meßstrecke beschrieben.

Fig. 2 zeigt eine ortsfeste Meßstelle mit zwischen zwei Schwellen 1 an einer von diesen abgestützten Schiene 2 vorgesehenen Sensoren 3', 3", 3"', die zumindest entweder am Schienenkopf 2' oder am Schienensteg 2" oder am Schienenfuß 2"'angeordnet sind. Auch eine Kombination von Sensoren ist möglich. Die Sensoren sind piezoelektrische Beschleunigungssensoren und/oder z.B. unter 45° im positiven und negativen Sinn aufgebrachte Dehnungsmeßstreifen, welche die Dehnung bzw. Beschleunigung der Schiene 2 in der Vertikalrichtung und in der Querrichtung aufnehmen und an eine nicht gezeigte Datenverarbeitungsanlage weiterleiten, in der ein Informationsarray gebildet wird. Das Informationsarray setzt sich aus mehreren Informationszellen zusammen.

Das zu prüfende Rad bildet beispielsweise seine Unrundheit auf der Schiene mit der Periodizität des Radumfanges ab. Der Radumfang u wird aus dem Raddurchmesser *D* gebildet, der seinerseits z.B. mit Hilfe meßtechnischer Laseroptik oder direkt aus dem Informationsarray gebildet wird. Das Rad läuft mit einem zufälligen Anfangswinkel in das Array ein, der praktisch den "Nullwinkel" der Unrundheitsdarstellung bildet.

Das Beschleunigungssignal ist dann positiv, wenn der Schienenkopf nach "unten", also in Richtung Erdmittelpunkt beschleunigt wird. Daraus folgt, daß ein "Unrundheitsberg" in Richtung positiver Beschleunigung, ein "Unrundheitstal" in Richtung negativer Beschleunigung weist.

Das reduzierte periodische Beschleunigungssignal $\ddot{Z}_{red}$ (φ) der Unrundheit kann durch eine diskrete Fourierreihe mit der Periodendauer $T = u/v$ dargestellt werden. Zur Verknüpfung von Meßzeit (Zeitindex) und Drehwinkel φ des zu prüfenden Rades wird die Fahrgeschwindigkeit *v* des überrollenden Rades im Verlauf der Meßstrecke berücksichtigt. Es gilt dann mit der Winkelgeschwindigkeit $\omega = d\varphi/dt$

$$\omega = 2\pi/T = \frac{2\pi}{u/v} = \frac{2v}{D} \qquad \text{und.} \qquad \varphi = \omega\, t$$

$$\ddot{z}(\omega\, t) = \ddot{z}(\omega\, t + i\, q), \;\; i = \pm 1, \pm 2, \ldots,$$

φ ist der Drehwinkel des Rades, *q* ist die Grundperiode des Zeitverlaufes.

In der Auswerteeinrichtung wird die Fourierreihe in komplexer Schreibweise (c komplexe Zahl) behandelt. Es ist dann

$$\ddot{z}_k(\varphi) = \sum_{n=-k}^{k} \underline{c}_n e^{jn\frac{2}{D}\omega t} \Rightarrow \mathfrak{F}(p) \qquad \text{mit} \qquad p = jn\frac{2}{D}\omega\, t$$

$$n = 0, \pm 1, \pm 2, \ldots, \pm k$$

mit

$$a_n = \underline{c}_{-n} + \underline{c}_n \qquad \text{bzw} \qquad b_n = -\frac{1}{j}(\underline{c}_{-n} - \underline{c}_n)$$

Man erhält durch die Fourierentwicklung die spektrale Darstellung der Beschleunigung. Es interessiert aber die Schienenbewegung selbst, auf die sich die Radform abbildet. Deshalb muß deren Spektrum noch durch zweimalige Integration ermittelt werden. Stehen die Harmonischen der Radformen erst einmal zur Verfügung, sind verschiedene Darstellungen der Radformen möglich.

**Patentansprüche**

1. Verfahren zur Erfassung von Radformen von Schienenrädern mit Hilfe einer Meßstrecke aus einer Reihe von an den Schienen angebrachten Meßelementen, welche Kraftwirkungen aufnehmen und entsprechende elektrische Signale über die Bewegung der Schiene in der Vertikalrichtung und vorzugsweise auch in der Querrichtung einer elektronischen Auswerteeinrichtung zur Darstellung der Radformen zuführen, **dadurch gekennzeichnet, daß** in der Auswerteeinrichtung aus den Signalen ein Informationsarray gebildet wird, das zumindest einem Radumfang entspricht und welches aus mehreren Informationszellen gebildet wird, derart, daß sich ihre Signalanteile stetig aneinanderfügen, wobei die Schieneneinsenkungen in relevante Anteile zerlegt und in der unmittelbaren Umgebung des Radaufstandspunktes berücksichtigt werden.

2. Verfahren nach Anspruch 1, **dadurch gekennzeichnet, daß** in der Auswerteeinrichtung eine kontinuierliche Darstellung der Signale als Funktion des Drehwinkels (φ) des zu prüfenden Rades vorgenommen wird.

3. Vorrichtung zur Durchführung des Verfahrens nach einem der Ansprüche 1 oder 2, mit einer Meßstrecke aus einer Reihe von an den Schienen angebrachten Meßelementen und einer mit diesen verbundenen elektronischen Signalauswerteeinrichtung zur Darstellung der Radformen, wobei die Meßelemente am Schienensteg (2") und/oder am Schienenfuß (2"') und/ oder am Schienenkopf (2') angebracht sind, **dadurch gekennzeichnet, daß** mindestens ein Meßelement am Schienensteg (2") in der neutralen Faser unter einem negativen und einem positiven 45°-Winkel zur neutralen Faser aufgebracht ist.

4. Vorrichtung nach Anspruch 3, **dadurch gekennzeichnet, daß** mindestens ein Meßelement als Dehnungsmeßstreifen ausgebildet ist.

5. Vorrichtung nach Anspruch 3 oder 4, **dadurch gekennzeichnet, daß** piezoelektrische Meßelemente aufgebracht sind.

**Claims**

1. Method for detecting wheel shapes of rail wheels using a measuring section composed of a number of measuring members which are fitted on the rails, absorb dynamic effects and feed corresponding electrical signals about the movement of the rails in the vertical direction and preferably also in the transverse direction to an electronic evaluation means for displaying the wheel shapes, **characterised in that** an information array is formed in the evaluation means of the signals, corresponds to at least one wheel circumference and is formed from a plurality of information

cells in such a way that the signal portions thereof always join together, the rail deflections being analysed in relevant portions and considered in the direct surroundings of the wheel contact point.

**2.** Method according to claim 1, **characterised in that**, in the evaluation means, the signals are continuously displayed as a function of the angle of rotation (φ) of the wheel to be examined.

**3.** Device for carrying out the method according to either claim 1 or claim 2, comprising a measuring section composed of a number of measuring members fitted on the rails and an electronic signal evaluation means connected to said measuring members for displaying the wheel shapes, the measuring members being fitted on the rail web (2") and/or on the rail foot (2"') and/or on the rail head (2'), **characterised in that** at least one measuring member is fitted on the rail web (2") in the neutral axis at a negative and a positive 45° angle to the neutral axis.

**4.** Device according to claim 3, **characterised in that** at least one measuring member is formed as a strain gauge.

**5.** Device according to either claim 3 or claim 4, **characterised in that** piezoelectric measuring members are fitted.

**Revendications**

**1.** Procédé pour détecter des formes de roues des roues sur rails à l'aide d'un tronçon de mesure constitué par une série d'éléments de mesure implantés sur les rails, lesquels éléments de mesure enregistrent des effets de force et amènent des signaux électriques correspondants concernant le mouvement du rail dans la direction verticale et de préférence aussi dans la direction transversale à un dispositif d'évaluation électronique pour représenter les formes de roues, **caractérisé en ce que** dans le dispositif d'évaluation, un tableau d'informations est formé à partir des signaux, qui correspond au moins à un périmètre de roue et qui est constitué par plusieurs cellules d'informations, de telle sorte que leurs parties de signaux s'ajoutent constamment les unes aux autres, les affaissements de rails étant décomposés en parties appropriées et pris en compte dans l'environnement immédiat des points de contact au sol des roues.

**2.** Procédé selon la revendication 1, **caractérisé en ce que**, dans le dispositif d'évaluation, on procède à une représentation en continu des signaux en fonction de l'angle de rotation (φ) de la roue à tester.

**3.** Dispositif pour la réalisation du procédé selon l'une quelconque des revendications 1 ou 2, avec un tronçon de mesure constitué par une série d'éléments de mesure implantés sur les rails et un dispositif d'évaluation de signaux électronique raccordé à ceux-ci pour la représentation des formes de roues, dans lequel les éléments de mesure sont disposés sur l'âme du rail (2") ou sur le patin du rail (2"') et/ou sur le champignon du rail (2'), **caractérisé en ce qu'**au moins un élément de mesure est appliqué sur l'âme du rail (2") dans la fibre neutre sous un angle négatif et un angle positif de 45° par rapport à la fibre neutre.

**4.** Dispositif selon la revendication 3, **caractérisé en ce qu'**au moins un élément de mesure est réalisé sous forme d'extensomètre.

**5.** Dispositif selon la revendication 3 ou 4, **caractérisé en ce que** des éléments de mesure piézoélectriques sont implantés.

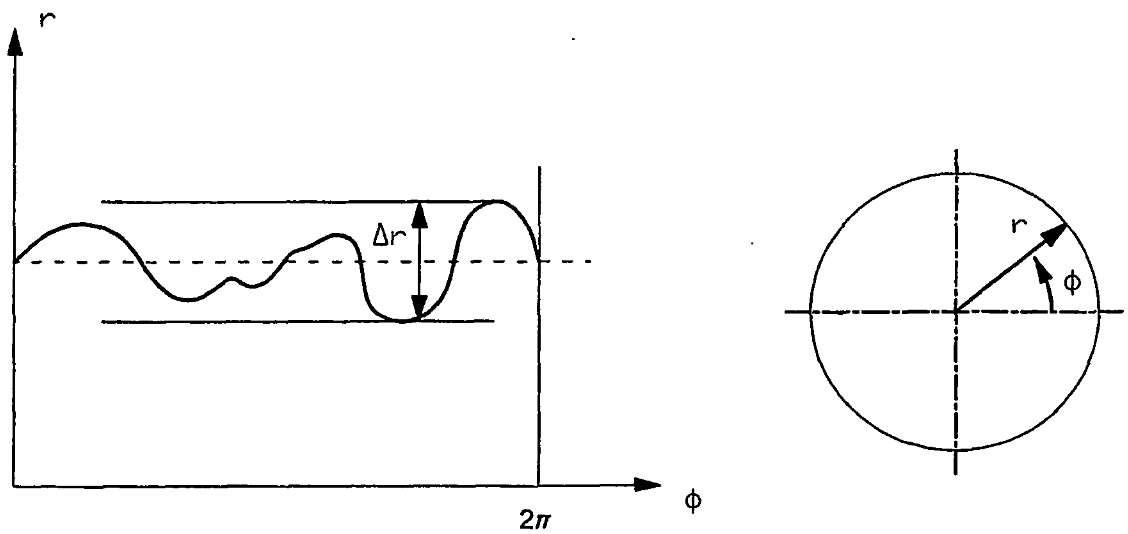


—— Radform in der Meßkreisebene

--- Kreisform in der Meßkreisebene

↕ Unrundheit Δr

Fig. 1

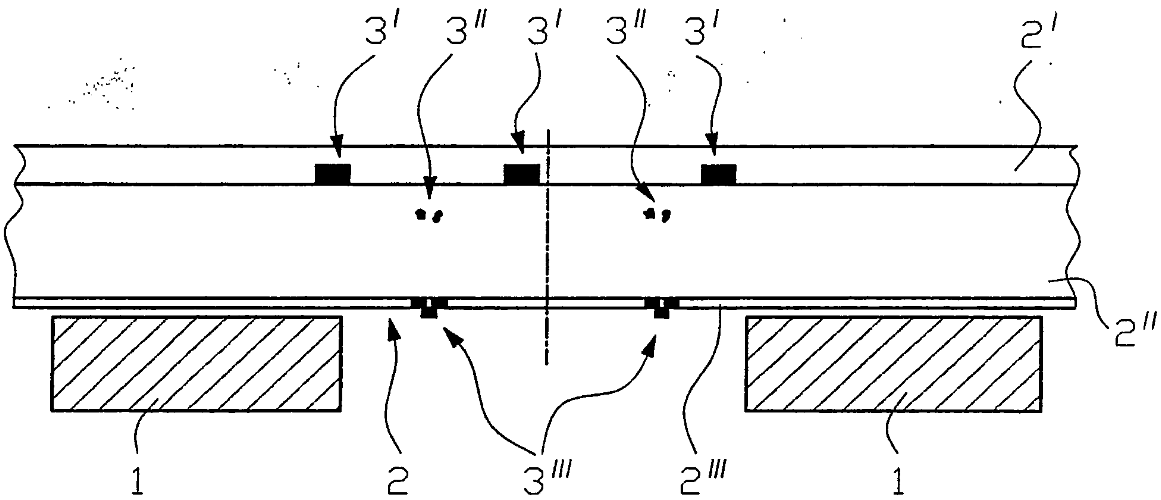


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1212228 B1
- EP 0282615 A
- US 4702104 A